(19) Europäisches Patentamt
European Patent Office
Office européen des brevets

(11) **EP 2 795 580 B1**

(12) **FASCICULE DE BREVET EUROPEEN**

(45) Date de publication et mention
de la délivrance du brevet:
**18.12.2019 Bulletin 2019/51**

(51) Int Cl.:
***G06T 7/20*** *(2017.01)*    ***G06T 7/269*** *(2017.01)*

(21) Numéro de dépôt: **12819105.3**

(22) Date de dépôt: **21.12.2012**

(86) Numéro de dépôt international:
**PCT/FR2012/053066**

(87) Numéro de publication internationale:
**WO 2013/093378 (27.06.2013 Gazette 2013/26)**

(54) **PROCÉDÉ D'ESTIMATION DE FLOT OPTIQUE À PARTIR D'UN CAPTEUR ASYNCHRONE DE LUMIÈRE**

VERFAHREN ZUR SCHÄTZUNG DES OPTISCHEN FLUSSES AUF BASIS EINES ASYNCHRONEN LICHTSENSORS

METHOD OF ESTIMATING OPTICAL FLOW ON THE BASIS OF AN ASYNCHRONOUS LIGHT SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2011 FR 1162137**

(43) Date de publication de la demande:
**29.10.2014 Bulletin 2014/44**

(73) Titulaires:
• **Sorbonne Université**
**75006 Paris (FR)**
• **Centre National de la Recherche Scientifique (C.N.R.S.)**
**75794 Paris Cedex 16 (FR)**

(72) Inventeurs:
• **BENOSMAN, Ryad**
**F-75016 Paris (FR)**
• **IENG, Siohoi**
**F-93100 Montreuil (FR)**

(74) Mandataire: **Plasseraud IP**
**66, rue de la Chaussée d'Antin**
**75440 Paris Cedex 09 (FR)**

(56) Documents cités:
• RYAD BENOSMAN ET AL: "Asynchronous frameless event-based optical flow", NEURAL NETWORKS, vol. 27, 25 novembre 2011 (2011-11-25), pages 32-37, XP055035741, ISSN: 0893-6080, DOI: 10.1016/j.neunet.2011.11.001

• CHIARA BARTOLOZZI ET AL: "Attentive motion sensor for mobile robotic applications", CIRCUITS AND SYSTEMS (ISCAS), 2011 IEEE INTERNATIONAL SYMPOSIUM ON, IEEE, 15 mai 2011 (2011-05-15), pages 2813-2816, XP032109722, DOI: 10.1109/ISCAS.2011.5938190 ISBN: 978-1-4244-9473-6

• TOBI DELBRUCK: "Frame-free dynamic digital vision", PROCEEDINGS OF THE INTERNATIONAL CONFERENCE ON SECURE-LIFE ELECTRONICS, ADVANCED ELECTRONICS FOR QUALITY LIFE AND SOCIETY, 7 mars 2008 (2008-03-07), pages 21-26, XP055035734, University of Tokyo cité dans la demande

• PATRICK LICHTSTEINER ET AL: "A 128128 120 dB 15 s Latency Asynchronous Temporal Contrast Vision Sensor", IEEE JOURNAL OF SOLID-STATE CIRCUITS, IEEE SERVICE CENTER, PISCATAWAY, NJ, USA, vol. 43, no. 2, 1 février 2008 (2008-02-01), pages 566-576, XP011200748, ISSN: 0018-9200, DOI: 10.1109/JSSC.2007.914337 cité dans la demande

• BENOSMAN R ET AL: "Asynchronous Event-Based Hebbian Epipolar Geometry", IEEE TRANSACTIONS ON NEURAL NETWORKS, IEEE SERVICE CENTER, PISCATAWAY, NJ, US, vol. 22, no. 11, 1 novembre 2011 (2011-11-01), pages 1723-1734, XP011411486, ISSN: 1045-9227, DOI: 10.1109/TNN.2011.2167239

**Description**

La présente invention concerne les méthodes d'estimation de flot optique dans les techniques d'imagerie.

Le flot optique est une approximation du mouvement dans une séquence d'images variant dans le temps. Les premiers travaux en matière de flot optique ont été réalisés par des ingénieurs dans le domaine de la télévision et par des personnes s'intéressant à la modélisation de la vision biologique. Depuis lors, ces techniques ont trouvé leur place dans une grande variété de disciplines, incluant la vision informatisée et la navigation de robots. Elles servent notamment à réaliser de la détection de mouvement, de la segmentation d'objets, des calculs de temps de collision, du codage à compensation de mouvement, etc.

De façon notoire, le flot optique est une mesure visuelle affectée de bruit. Il s'exprime couramment comme un champ de vitesses à l'intérieur de la séquence d'images. Mais l'estimation de ce champ suppose la résolution d'un problème mal posé, c'est-à-dire comportant trop d'inconnues par rapport au nombre d'équations. En conséquence, pour estimer les vecteurs de flot, des hypothèses et contraintes supplémentaires doivent être appliquées. Toutefois, ces hypothèses et contraintes ne sont pas toujours valides. En outre, la présence inévitable de bruit stochastique dans les séquences d'images naturelles non filtrées donne lieu à diverses difficultés pour son utilisation dans la boucle de commande d'un robot mobile.

Les techniques de flot optique peuvent être réparties en quatre catégories (cf. J.L. Barron, et al., "Performance of Optical Flow Techniques", International Journal of Computer Vision, Vol. 12, No. 1, pp. 43-77):

- les méthodes basées sur l'énergie expriment le flot optique d'après les sorties de filtres adaptés en vitesse définis dans le domaine de Fourier;
- les méthodes basées sur la phase estiment les vitesses d'image en termes de sorties de filtres passe-bande;
- les méthodes à base de corrélation recherchent la meilleure correspondance entre des petits voisinages spatiaux dans des images temporellement adjacentes;
- les méthodes différentielles, ou à base de gradient, utilisent des dérivées spatio-temporelles de l'intensité d'image et une hypothèse de constance de l'illumination.

La majorité des travaux sur la conception, la comparaison et l'application des techniques de flot optique se concentre sur les approches à base de corrélation ou de gradient. Néanmoins, toutes ces méthodes souffrent de manière intrinsèque de lenteur d'exécution, de sorte qu'elles sont mal adaptées à des contraintes d'exécution en temps réel qui peuvent exister dans un certain nombre d'applications.

Une autre solution pour la détection de mouvement repose sur un capteur visuel dénommé EMD ("Elementary Motion Detector", détecteur de mouvement élémentaire). Les EMD sont basés sur des modèles de détection de mouvement reproduisant des mécanismes de vision supposés des insectes. Deux photorécepteurs adjacents sont utilisés pour fournir des signaux d'image qui sont ensuite fournis à un banc de filtres temporels passe-haut et passe-bas. Les filtres passe-haut enlèvent la composante continue de l'illumination qui n'est pas porteuse d'information de mouvement. Puis le signal est subdivisé entre deux canaux dont un seul comporte un filtre passe-bas. Le retard appliqué par le filtre passe-bas est exploité pour fournir un signal d'image retardé qui est ensuite corrélé avec celui du canal adjacent non-retardé. Finalement, une soustraction entre les deux canaux fournit une réponse ayant une sensibilité à la direction de mouvement, pouvant donc être exploitée pour mesurer le mouvement visuel. La détection de mouvement par un EMD est sensible au contraste d'image, l'amplitude du mouvement détecté étant plus grande lorsqu'il y a un contraste élevé. Ceci perturbe à la précision de la mesure de mouvements visuels. Du fait de ce manque de précision, les EMD ne conviennent pas pour des applications générales de navigation, surtout pour des tâches requérant un contrôle fin du mouvement.

Contrairement aux caméras classiques qui enregistrent des images successives à des instants d'échantillonnage prédéfinis, les rétines biologiques ne transmettent que peu d'information redondante sur la scène à visualiser, et ce de manière asynchrone. Des capteurs de vision asynchrones basés sur événements délivrent des données numériques compressées sous forme d'événements. Une présentation générale de tels capteurs peut être consultée dans "Activity-Driven, Event-Based Vision Sensors", T. Delbrück, et al., Proceedings of 2010 IEEE International Symposium on Circuits and Systems (ISCAS), pp. 2426-2429. Les capteurs de vision basés sur événements ont pour avantage d'enlever de la redondance, de réduire les temps de latence et d'augmenter la gamme dynamique par rapport aux caméras classiques.

La sortie d'un tel capteur de vision peut consister, pour chaque adresse de pixel, en une séquence d'événements asynchrones représentatifs des changements de réflectance de la scène au moment où ils se produisent. Chaque pixel du capteur est indépendant et détecte des changements d'intensité supérieurs à un seuil depuis l'émission du dernier événement (par exemple un contraste de 15% sur le logarithme de l'intensité). Lorsque le changement d'intensité dépasse le seuil fixé, un événement ON ou OFF est généré par le pixel selon que l'intensité augmente ou diminue. Le capteur n'étant pas échantillonné sur une horloge comme une caméra classique, il peut rendre compte du séquencement des événements avec une très grande précision temporelle (par exemple de l'ordre de 1 μs). Si on utilise un tel capteur pour reconstruire une séquence d'images, on peut atteindre une cadence d'images de plusieurs kilohertz, contre quelques dizaines de hertz pour des caméras classiques.

Si les capteurs de vision basés sur événements ont des perspectives prometteuses, il n'existe pas à ce jour de méthode bien adaptée à la pratique pour déterminer un flot optique à partir des signaux délivrés par de tels capteurs. Dans "Frame-free dynamic digital vision", Proceedings of the International Conférence on Secure-Life Electronics, Advanced Electronics for Quality Life and Society, Université de Tokyo, 6-7 mars 2008, pp. 21-26, T. Delbrück suggère d'utiliser des étiqueteurs ("labelers") pour donner des significations additionnelles aux événements détectés, comme des orientations de contours ou des directions de mouvement, sans toutefois fournir d'indication permettant d'envisager l'estimation d'un flot optique.

Dans l'article "Asynchronous frameless event-based optical flow" paru en mars 2012 dans la revue "Neural Networks", Vol. 27, pp. 32-37, R. Benosman et al. évoquent l'estimation de flots optiques à partir des événements détectés par un capteur asynchrone. L'algorithme utilisé est à base de gradient et repose sur la résolution d'un système d'équations dans lesquelles les gradients spatiaux en un pixel donné de coordonnées (x, y) sont estimés par différence entre les événements survenus à ce pixel (x, y) et ceux survenus aux pixels de coordonnées (x-1, y) et (x, y-1) au même instant.

Il existe un besoin pour un procédé d'estimation de flot optique qui permette d'accélérer les estimations par rapport à ce qu'on sait faire à partir de caméras classiques. Un autre besoin est de fournir un procédé d'estimation de flot optique à partir des signaux issus d'un capteur de vision basé sur événements, afin de pouvoir utiliser diverses techniques et applications qui ont été mises au point en s'appuyant sur l'exploitation de flots optiques.

Il est proposé un procédé d'estimation de flot optique tel que défini dans la revendication 1.

Le procédé exploite le fait que le temps d'occurrence du dernier événement en une position de pixel donnée est une fonction monotone croissante. Cette fonction définit, pour les différentes positions de pixel, une surface dont les variations locales renseignent sur le champ de vitesse dans la scène telle que la voit le capteur. La quantification de ces variations peut être effectuée de manière très rapide, avec un retard de l'ordre du temps de réponse des pixels du capteur, par exemple inférieur à ou de l'ordre de la milliseconde.

Des modes de réalisation du procédé sont précisés davantage dans les revendications 2-12.

Un autre aspect de la présente invention se rapporte à un dispositif d'estimation de flot optique tel que défini dans la revendication 13.

D'autres particularités et avantages de la présente invention apparaîtront dans la description ci-après d'un exemple de réalisation non limitatif, en référence aux dessins annexés, dans lesquels :

- la figure 1 est un schéma synoptique d'un dispositif d'estimation de flot optique adapté à la mise en œuvre de l'invention;

- la figure 2A est un diagramme montrant un exemple de profil d'intensité lumineuse au niveau d'un pixel d'un capteur asynchrone;

- la figure 2B montre un exemple de signal délivré par le capteur asynchrone en réponse au profil intensité de la figure 2A;

- la figure 2C illustre la reconstruction du profil intensité à partir du signal de la figure 2B;

- les figures 3A-B sont des diagrammes analogues à ceux des figures 2A-B illustrant un mode d'acquisition lumineuse utilisable dans un autre exemple de réalisation du procédé;

- la figure 4 est un diagramme illustrant un mode de réalisation du procédé d'estimation de flot optique;

- la figure 5 est un diagramme montrant des événements générés par un capteur asynchrone placé en regard d'une scène comportant une barre tournante;

- la figure 6 est un diagramme illustrant un autre mode de réalisation du procédé d'estimation de flot optique.

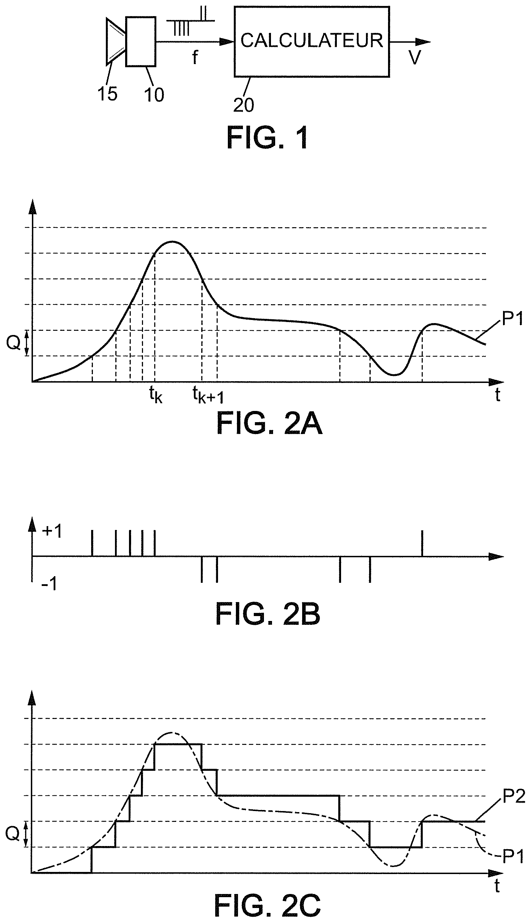

Le dispositif d'estimation de flot optique représenté sur la figure 1 comporte un capteur de vision asynchrone basé sur événements 10 placé en regard d'une scène et recevant le flux lumineux de la scène à travers une optique d'acquisition 15 comprenant une ou plusieurs lentilles. Le capteur 10 est placé dans le plan image de l'optique d'acquisition 15. Il comporte un groupement d'éléments photosensibles organisés en une matrice de pixels. Chaque pixel correspondant à un élément photosensible produit des événements successifs dépendant des variations de lumière dans la scène.

Un calculateur 20 traite l'information asynchrone f issue du capteur 10, c'est-à-dire les séquences d'événements reçues de manière asynchrone des différents pixels, pour en extraire de l'information V sur le flot optique observé dans la scène. Le calculateur 20 fonctionne sur des signaux numériques. Il peut être implémenté par programmation d'un processeur approprié. Une implémentation matérielle du calculateur 20 à l'aide de circuits logiques spécialisés (ASIC, FPGA, ...) est également possible.

Pour chaque pixel de la matrice, le capteur 10 engendre une séquence de signal asynchrone basé sur événement à partir des variations de lumière ressenties par le pixel dans la scène apparaissant dans le champ de vision du capteur. Un tel capteur photosensible asynchrone permet dans certains cas d'approcher la réponse physiologique d'une rétine. On le désigne alors par l'acronyme DVS : "Dynamic Vision Sensor" (capteur de vision dynamique).

Le principe d'acquisition par ce capteur asynchrone est illustré par les figures 2A-C. L'information consiste en une succession de temps $t_k$ (k = 0, 1, 2, ...) auxquels un seuil d'activation Q est atteint. La figure 2A montre un exemple de profil d'intensité lumineuse P1 vue par un pixel de la matrice du DVS. Chaque fois que cette intensité augmente d'une quantité égale au seuil d'activation Q à partir de ce qu'elle était au temps $t_k$, un nouvel instant $t_{k+1}$ est identifié et une raie positive (niveau +1 sur la figure 2B) est émise à cet instant $t_{k+1}$. Symétriquement, chaque fois que l'intensité du pixel diminue de la quantité Q à partir de ce qu'elle était au temps $t_{k'}$, un nouvel instant $t_{k'+1}$ est identifié et une raie négative (niveau -1 sur la figure 2B) est émise à cet instant $t_{k'+1}$. La séquence de signal asynchrone pour le pixel consiste alors en une succession d'impulsions ou raies ("spikes") positives ou négatives positionnées dans le temps aux instants $t_k$ dépendant du profil lumineux pour le pixel. Ces raies peuvent être représentées mathématiquement par des pics de Dirac positifs ou négatifs et caractérisées chacune par un instant d'émission $t_k$ et un bit de signe. La sortie du DVS 10 est ainsi sous la forme d'une représentation adresse-événement (AER). La figure 2C montre le profil d'intensité P2 qu'on est capable de reconstruire comme une approximation du profil P1 par intégration dans le temps du signal asynchrone de la figure 2B.

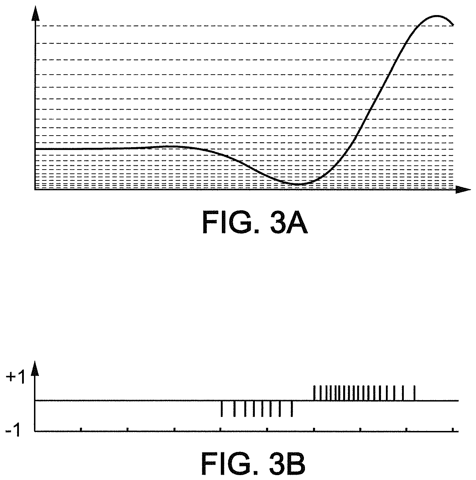

Le seuil d'activation Q peut être fixe, comme dans le cas des figures 2A-C, ou adaptatif en fonction de l'intensité lumineuse, comme dans le cas des figures 3A-B. Par exemple, le seuil ±Q peut être comparé aux variations du logarithme de l'intensité lumineuse pour la génération d'un événement ±1.

À titre d'exemple, le DVS 10 peut être du genre décrit dans "A 128×128 120 dB 15 μs Latency Asynchronous Temporal Contrast Vision Sensor", P. Lichtsteiner, et al., IEEE Journal of Solid-State Circuits, Vol. 43, No. 2, février 2008, pp. 566-576, ou dans la demande de brevet US 2008/0135731 A1. La dynamique d'une rétine (durée minimum entre les potentiels d'action) de l'ordre de quelques millisecondes peut être convenablement reproduite avec un DVS de ce type. La performance en dynamique est en tout cas largement supérieure à celle qu'on peut atteindre avec une caméra vidéo classique ayant une fréquence d'échantillonnage réaliste.

Il est à noter que la forme du signal asynchrone délivré pour un pixel par le DVS 10, qui constitue le signal d'entrée du calculateur 20, peut être différente d'une succession de pics de Dirac, les événements représentés pouvant avoir une largeur temporelle ou une amplitude ou une forme d'onde quelconque dans ce signal asynchrone basé sur événement.

On notera que le procédé proposé ici est applicable à d'autres types de DVS, et aussi à des capteurs de lumière dont les signaux de sortie sont générés selon une représentation adresse-événement sans nécessairement chercher à reproduire le comportement de la rétine.

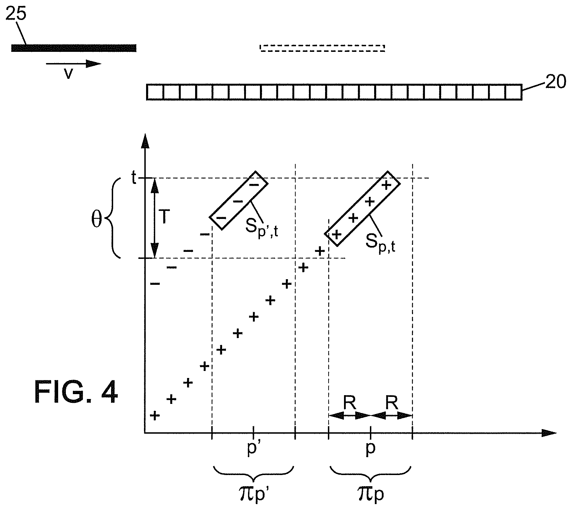

La figure 4 montre très schématiquement un capteur asynchrone monodimensionnel 20, c'est-à-dire composé d'une rangée de pixels, devant lequel un objet 25 défile à une vitesse v. On suppose que l'arrivée du bord avant de l'objet 25 devant un pixel engendre dans ce pixel un événement ON (marqué "+" sur la figure 4) et que le bord arrière de l'objet 25 engendre en passant devant le pixel un événement OFF (marqué "-" sur la figure 4). On s'intéresse au flot optique vu par le capteur 10 en un lieu d'estimation p et à un temps d'estimation t. Pour cela, on prend en considération un voisinage spatial $\pi_p$ du lieu d'estimation p, ainsi qu'un intervalle de temps θ défini par rapport au temps d'estimation t. Dans le cas représenté sur la figure 4, le voisinage $\pi_p$ est de la forme $\pi_p$ = [p-R, p+R], et l'intervalle de temps θ est une période de durée prédéfinie T se terminant au temps d'estimation: θ = [t-T, t].

La figure 4 montre également l'ensemble $S_{p,t}$ des événements reçus des pixels du capteur 10 en provenance du voisinage spatial $\pi_p$ dans l'intervalle de temps θ. On voit dans la représentation espace-temps du graphique situé à la partie inférieure de la figure 4, que les événements de l'ensemble $S_{p,t}$ sont alignés. La pente de la droite passant par ces événements indique la vitesse v du bord avant de l'objet 25 vu par certains pixels du capteur 10. Cette vitesse v se retrouve aussi en d'autres points du capteur qui ont vu passer le bord arrière de l'objet 25 au cours de l'intervalle de temps θ. C'est notamment la pente des événements de l'ensemble $S_{p',t}$ reçus des pixels du capteur 10 en provenance du voisinage spatial $\pi_{p'}$ d'un autre lieu d'estimation p' dans l'intervalle de temps θ.

Dans la pratique, les événements ON ou OFF envoyés par les pixels du capteur 10 n'ont pas la régularité temporelle représentée dans le schéma idéalisé de la figure 4. Au contraire, les temps d'occurrence des événements ont un comportement relativement chaotique dû aux états électroniques non totalement prévisibles au sein des éléments photosensibles du capteur ainsi qu'au bruit d'acquisition. Ainsi, les événements de l'ensemble $S_{p,t}$ ont typiquement une dispersion autour de la droite dont la pente est représentative du flot optique au point (p, t). Ceci n'empêche pas l'estimation de la pente que présentent les événements de l'ensemble $S_{p,t}$ dans la représentation espace-temps. Une possibilité est de déterminer la droite qui approche au mieux les points de l'ensemble $S_{p,t}$ au sens des moindres carrés, avec éventuellement une pondération plus forte des positions de pixels les plus proches du lieu d'estimation p. La pente de cette droite peut alors être déterminée puis inversée pour fournir une estimation de vitesse dans le champ de vision du capteur 10.

La pente peut aussi être estimée de manière rapide par convolution des temps d'occurrence des événements de l'ensemble $S_{p,t}$ avec un noyau spatial de différentiation. Dans un tel cas, il peut être souhaitable d'atténuer les effets du bruit en appliquant, avant le noyau de convolution, une opération de lissage de l'ensemble d'événements $S_{p,t}$ dans la représentation espace-temps. Le lissage peut notamment être effectué en appliquant un filtre médian.

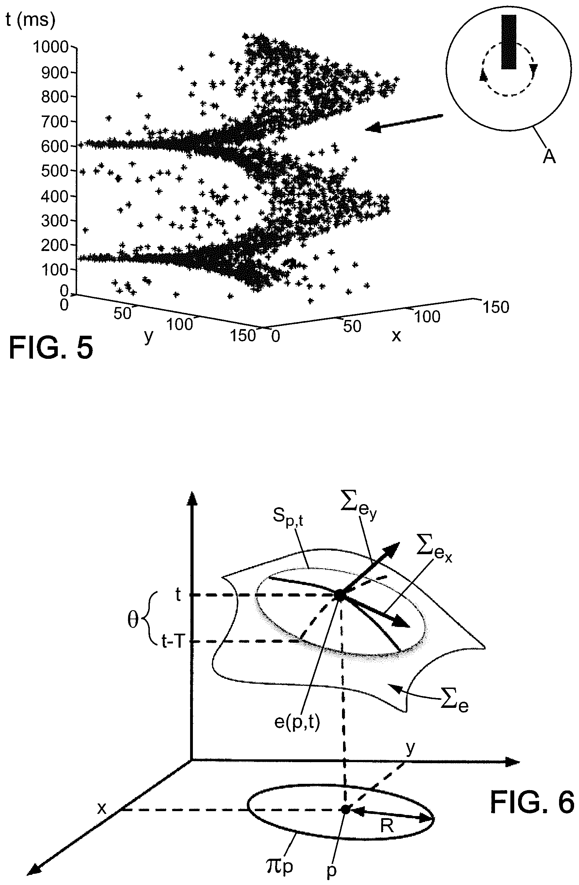

Dans des applications d'imagerie, la matrice de pixels du capteur 10 est plus souvent bidimensionnelle que monodimensionnelle. La représentation espace-temps où on peut placer les événements ON ou OFF provenant des pixels est alors une représentation à trois dimensions telle que celle présentée sur la figure 5. Sur cette figure, chaque point indique un événement engendré de manière asynchrone à un instant t au niveau d'un pixel du capteur, de position $\begin{pmatrix} x \\ y \end{pmatrix}$, par le mouvement d'une barre tournant à vitesse angulaire constante comme schématisé dans l'encadré A. La majeure partie de ces points se répartissent à proximité d'une surface de forme générale hélicoïdale. Toutefois, les points ne sont pas exactement alignés sur cette surface compte tenu du comportement chaotique mentionné ci-dessus. En outre, la figure montre un certain nombre d'événements à distance de la surface hélicoïdale qui sont mesurés sans correspondre au mouvement effectif de la barre. Ces événements sont du bruit d'acquisition.

Plus généralement, en présence de mouvements d'un ou plusieurs objets dans le champ de vision du capteur 10, des événements apparaissent dans la représentation tridimensionnelle $(x, y, t)$, et on s'intéresse à rechercher le flot optique correspondant à ces mouvements.

On désigne par $e(p, t)$ un événement survenant au temps t en un pixel situé au lieu $p = \begin{pmatrix} x \\ y \end{pmatrix}$. La valeur de $e(p, t)$ est +1 ou -1 selon la polarité ON (changement de contraste positif) ou OFF (changement de contraste négatif) de l'événement. À nouveau, on peut définir un voisinage spatial $\pi_p$ du pixel p: $\pi_p = \{p' / \|p'-p\| \leq R\}$ et un intervalle de temps $\theta = [t-T, t]$, et considérer les événements provenant de pixel du voisinage $\pi_p$ dans l'intervalle de temps $\theta$, en ne retenant pour chaque pixel que l'événement le plus récent (s'il y a un événement au cours de l'intervalle $\theta$). On construit ainsi un ensemble d'événements $S_{p,t}$ qu'on peut voir comme une portion, comprise dans le volume $\pi_p \times \theta$, d'une surface $\Sigma_e$ dans la représentation espace-temps des événements.

Pour chaque pixel p de la matrice, on mémorise le temps d'occurrence du dernier événement observé. On peut alors définir la fonction qui chaque position p affecte le temps d'occurrence $\Sigma_e(p)$ de l'événement le plus récent à cette position. La surface $\Sigma_e$ est la représentation de cette fonction dans l'espace à trois dimensions. Il s'agit d'une surface ascendante en fonction du temps. On élimine les points de cette surface $\Sigma_e$ dont la projection dans le plan de la matrice de pixels sont en dehors du voisinage spatial $\pi_p$ et ceux dont la projection sur l'axe des temps est en dehors de l'intervalle $\theta$, pour sélectionner l'ensemble d'événements $S_{p,t}$.

Le calculateur 20 estime alors les dérivées partielles de la surface $\Sigma_e$ au niveau du point $e(p, t)$ par rapport aux deux paramètres spatiaux x et y:

$$\Sigma_{e_x} = \frac{\partial \Sigma_e}{\partial x} \text{ et } \Sigma_{e_y} = \frac{\partial \Sigma_e}{\partial y}.$$ Ces dérivées partielles indiquent la pente que présentent les événements de $S_{p,t}$ autour du lieu d'estimation. Autour de $e(p, t)$, c'est-à-dire dans la portion de surface que représente $S_{p,t}$, on peut écrire $\Sigma_e$ comme:

$$\Sigma_e(p+\Delta p) = \Sigma_e(p) + \nabla\Sigma_e . \Delta p + o(\|\Delta p\|)$$

où $\nabla\Sigma_e = \left( \frac{\partial \Sigma_e}{\partial x}, \frac{\partial \Sigma_e}{\partial y} \right)$.

Les dérivées partielles de $\Sigma_e$ sont des fonctions d'une seule variable x ou y. Le temps étant une fonction strictement croissante, $\Sigma_e$ est une surface de dérivées non nulles en chaque point. On peut alors utiliser le théorème de la fonction inverse pour écrire, autour d'une position $p = \begin{pmatrix} x \\ y \end{pmatrix}$:

$$\frac{\partial \Sigma_e}{\partial x}(x, y_0) = \frac{d\Sigma_e|_{y=y_0}}{dx}(x) = \frac{1}{v_x(x, y_0)}$$

$$\frac{\partial \Sigma_e}{\partial y}(x_0, y) = \frac{d\Sigma_e|_{x=x_0}}{dy}(y) = \frac{1}{v_y(x_0, y)}$$

où $\Sigma_e|_{x=x_0}$ et $\Sigma_e|_{y=y_0}$ sont $\Sigma_e$ restreinte respectivement à x en $x_0$ et à y en $y_0$. Le gradient $\nabla\Sigma_e$ peut alors s'écrire $\nabla\Sigma_e = (1/v_x, 1/v_y)$, ce qui donne les inverses des vitesses pixelliques $v_x$, $v_y$ des événements en fonction du temps.

De façon analogue au cas précédent, la quantification des variations des temps d'occurrence des événements peut comporter la détermination d'un plan ayant une distance minimale, au sens des moindres carrés, par rapport aux événements de l'ensemble $S_{p,t}$ dans la représentation espace-temps. Les composantes du gradient $\nabla\Sigma_e$ peuvent aussi être estimées par convolution avec des noyaux de différentiation en x et y après une éventuelle opération de lissage.

Pour compléter les informations du flot optique, le calculateur 20 peut en outre procéder à une estimation de dérivées secondes de $\Sigma_e$ autour du point e(p, t). Cette information sur les dérivées secondes rend compte des accélérations observables dans le champ de vision du capteur 10. Les dérivées du second ordre $\dfrac{\partial^2 \Sigma_e}{\partial x^2}$, $\dfrac{\partial^2 \Sigma_e}{\partial x \partial y}$ et $\dfrac{\partial^2 \Sigma_e}{\partial y^2}$ représentent la courbure locale de la surface $\Sigma_e$ qui fournit une mesure de la fréquence apparente d'un événement. Si la courbure est nulle, l'événement se produit à cadence fixe dans le plan focal. Les augmentations ou diminutions de la courbure se rapportent aux accélérations des bords générant des événements dans la scène.

Dans l'exemple qui précède, l'ensemble $S_{p,t}$ d'événements sélectionné pour un lieu d'estimation p et un temps d'estimation t donnés est composé d'événements de polarité quelconque (ON ou OFF). Le temps d'occurrence de l'événement le plus récent, ON ou OFF, provenu de chaque pixel est mémorisé en relation avec la position de ce pixel, ce qui permet de n'inclure toujours dans les ensembles $S_{p,t}$ que les derniers événements vus par des pixels de la matrice. Il peut se produire des cas où l'ensemble $S_{p,t}$ inclut des événements de polarités différentes. Ces cas donnent lieu à quelques erreurs, relativement rares, dans les pentes estimées, qui ne perturbent pas fortement les mesures.

Pour réduire le nombre de ces cas, une possibilité est de n'inclure dans les ensembles d'événements $S_{p,t}$ que des événements de même polarité. On peut notamment mémoriser deux tableaux pour les différents pixels de la matrice, l'un contenant les temps d'occurrence des événements ON les plus récents, l'autre contenant les temps d'occurrence des événements OFF les plus récents. Dans une telle réalisation, la réception à un temps t d'un événement ayant une polarité donnée, ON ou OFF, en un pixel de position p fait construire un ensemble $S_{p,t}$ composé de chaque événement ayant cette polarité dont le temps d'occurrence est dans l'intervalle $\theta = [t-T, t]$ et mémorisé pour un pixel du voisinage $\pi_p$. Le calculateur peut alors procéder à une estimation des dérivées premières et/ou secondes dans l'ensemble $S_{p,t}$ ainsi constitué.

Les moments auxquels le calculateur 20 procède à une quantification des variations des temps d'occurrence d'événements autour d'une position de pixel donnée peuvent être choisis en fonction de l'arrivée des événements sur ce pixel.

Par exemple, à réception d'un événement e(p, t) en provenance d'un pixel de position p dans la matrice, à un instant de détection t, le calculateur 20 met à jour le tableau où sont mémorisés les temps d'occurrence des événements les plus récents (en remplaçant par t la précédente valeur du tableau à la position p), puis détermine si l'ensemble $S_{p,t}$ comporte suffisamment d'événements récents pour pouvoir réaliser une estimation raisonnable du mouvement. Pour cela, le calculateur 20 peut dénombrer les temps d'occurrence, mémorisés dans le tableau pour les positions de pixel du voisinage spatial $\pi_p$, qui tombent dans l'intervalle de temps $\theta$. Si le nombre de temps d'occurrence ainsi déterminé est inférieur à un seuil prédéfini $\alpha$, aucune quantification des variations des temps d'occurrence n'est effectuée, l'événement qui vient d'être détecté étant considéré comme du bruit. En revanche, si le seuil $\alpha$ est dépassé, on estime que la surface $\Sigma_e$ contient suffisamment de points proches de e(p, t) pour pouvoir y réaliser une estimation de pente afin de quantifier les variations des temps d'occurrence. Le seuil $\alpha$ est typiquement défini en proportion (par exemple 10 à 30 %) du nombre de pixels que le capteur comporte dans le voisinage spatial $\pi_p$.

Dans les exemples de réalisation qui précèdent, deux paramètres R et T sont à régler pour procéder aux estimations de flot optique. Le choix de ces paramètres dépend des caractéristiques physiques du capteur (espacement entre pixels, temps de réponse) et de l'ordre de grandeur des dimensions et vitesses, dans le plan image, des objets dont on souhaite détecter les mouvements. À titre d'exemple, et sans que ceci soit limitatif, le voisinage spatial peut être dimensionné avec un rayon R de l'ordre de 3 à 5 pixels dans le plan de la matrice, et la durée T de l'intervalle de temps $\theta$ peut représenter de l'ordre de 500 $\mu$s à 2 ms. Ce choix dépend du matériel employé et de l'application.

Les modes de réalisation décrits ci-dessus sont des illustrations de la présente invention. Diverses modifications peuvent leur être apportées sans sortir du cadre de l'invention qui ressort des revendications annexées.

**Revendications**

1. Procédé d'estimation de flot optique, comprenant:

   - recevoir de l'information asynchrone provenant d'un capteur de lumière (10) ayant une matrice de pixels disposée en regard d'une scène, l'information asynchrone comprenant, pour chaque pixel de la matrice, des événements successifs provenant dudit pixel et dépendant de variations de lumière dans la scène,

   **caractérisé en ce qu'**il comprend en outre :

   - pour chaque pixel de la matrice, mémoriser le temps d'occurrence d'un événement le plus récent provenu dudit pixel ;
   - pour un lieu d'estimation (p) dans la matrice de pixels et un temps d'estimation (t), sélectionner un ensemble ($S_{p,t}$) d'événements provenant de pixels compris dans un voisinage spatial ($\pi_p$) du lieu d'estimation et survenus dans un inter-

valle de temps ($\theta$) défini par rapport au temps d'estimation, l'ensemble ayant au plus un événement par pixel du voisinage spatial et incluant chaque événement ayant un temps d'occurrence dans ledit intervalle de temps ($\theta$) défini par rapport au temps d'estimation et mémorisé pour un pixel dudit voisinage spatial ($\pi_p$) du lieu d'estimation; et

- quantifier les variations des temps d'occurrence des événements de l'ensemble sélectionné en fonction des positions, dans la matrice, des pixels d'où proviennent ces événements.

2. Procédé selon la revendication 1, dans lequel la quantification des variations comprend l'estimation d'une pente que présentent les événements de l'ensemble sélectionné ($S_{p,t}$) dans une représentation espace-temps autour du lieu d'estimation.

3. Procédé selon la revendication 2, comprenant, avant l'estimation de pente, une opération de lissage, dans la représentation espace-temps, de l'ensemble d'événements sélectionné ($S_{p,t}$).

4. Procédé selon l'une quelconque des revendications 2 et 3, dans lequel la matrice de pixels est bidimensionnelle et la quantification des variations comprend la détermination d'un plan présentant une distance minimale par rapport aux événements de l'ensemble sélectionné ($S_{p,t}$) dans la représentation espace-temps.

5. Procédé selon l'une quelconque des revendications 2 et 3, dans lequel la matrice de pixels est monodimensionnelle et la quantification des variations comprend la détermination d'une droite présentant une distance minimale par rapport aux événements de l'ensemble sélectionné ($S_{p,t}$) dans la représentation espace-temps.

6. Procédé selon l'une quelconque des revendications 2 à 5, dans lequel la quantification des variations comprend en outre une estimation de dérivées secondes que présentent les événements de l'ensemble sélectionné ($S_{p,t}$) dans la représentation espace-temps autour du lieu d'estimation.

7. Procédé selon l'une quelconque des revendications précédentes, dans lequel les événements provenant des pixels de la matrice ont chacun une polarité parmi plusieurs polarités possibles, et dans lequel l'ensemble d'événements ($S_{p,t}$) sélectionné pour le lieu d'estimation et le temps d'estimation est composé d'événements de polarité quelconque.

8. Procédé selon l'une quelconque des revendications 1 à 7, dans lequel les événements provenant des pixels de la matrice ont chacun une polarité parmi deux polarités possibles, et dans lequel l'ensemble d'événements ($S_{p,t}$) sélectionné pour le lieu d'estimation et le temps d'estimation est composé d'événements de même polarité.

9. Procédé selon la revendication 8, dans lequel, pour chaque pixel de la matrice et chaque polarité possible, le temps d'occurrence de l'événement le plus récent provenu dudit pixel avec ladite polarité est mémorisé, et dans lequel la sélection de l'ensemble d'événements ($S_{p,t}$) pour le lieu d'estimation et le temps d'estimation comprend, suite à la réception d'un événement ayant une polarité donnée au lieu d'estimation:

- inclure dans ledit ensemble chaque événement ayant la polarité donnée et un temps d'occurrence dans l'intervalle de temps défini par rapport au temps d'estimation et mémorisé pour un pixel du voisinage spatial du lieu d'estimation.

10. Procédé selon l'une quelconque des revendications précédentes, dans lequel ledit intervalle de temps ($\theta$) est une période de durée prédéfinie (T) se terminant au temps d'estimation.

11. Procédé selon l'une quelconque des revendications précédentes, dans lequel les étapes de sélection d'un ensemble d'événements ($S_{p,t}$) et de quantification des variations des temps d'occurrence sont exécutées en prenant comme lieu d'estimation la position d'un pixel où un événement est détecté et comme temps d'estimation un instant de détection dudit événement.

12. Procédé selon la revendication 11, dans lequel la sélection de l'ensemble d'événements ($S_{p,t}$) est effectuée en réponse à la détection d'un événement provenant d'un pixel de la matrice à un instant de détection, et dans lequel la quantification des variations des temps d'occurrence est effectuée pour mettre à jour une information de mouvement à condition que l'ensemble d'événements contienne un nombre d'événements supérieur à un seuil.

13. Dispositif d'estimation de flot optique, comprenant:

- un capteur de lumière ayant une matrice de pixels à disposer en regard d'une scène et adapté pour délivrer de l'information asynchrone comprenant, pour chaque pixel de la matrice, des événements successifs provenant dudit pixel et dépendant de variations de lumière dans la scène; et
- un calculateur,

**caractérisé en ce que** le calculateur est configuré pour mémoriser, pour chaque pixel de la matrice, le temps d'occurrence d'un événement le plus récent provenu dudit pixel, et pour exécuter les étapes suivantes pour un lieu d'estimation dans la matrice de pixels et un temps d'estimation:

    • sélectionner un ensemble d'événements provenant de pixels compris dans un voisinage spatial du lieu d'estimation et survenus dans un intervalle de temps défini par rapport au temps d'estimation, l'ensemble ayant au plus un événement par pixel du voisinage spatial et incluant chaque événement ayant un temps d'occurrence dans ledit intervalle de temps ($\theta$) défini par rapport au temps d'estimation et mémorisé pour un pixel dudit voisinage spatial ($\pi_p$) du lieu d'estimation; et
    • quantifier les variations des temps d'occurrence des événements de l'ensemble sélectionné en fonction des positions, dans la matrice, des pixels d'où proviennent ces événements.

**Patentansprüche**

1. Verfahren zum Schätzen eines optischen Flusses, umfassend:

    - Erhalten von asynchronen Informationen, welche von einem Lichtsensor (10) stammen, welcher eine Matrix von Pixeln aufweist, welche zu einer Szenerie weisend angeordnet sind, wobei die asynchronen Informationen für jeden Pixel der Matrix aufeinander folgende Ereignisse umfassen, welche von dem Pixel stammen und von Variationen des Lichts in der Szenerie abhängen,

    **dadurch gekennzeichnet, dass** es ferner umfasst:

    - für jeden Pixel der Matrix, Speichern der Zeit eines Auftretens eines jüngsten Ereignisses, welches von dem Pixel stammt;
    - für einen Schätzort (p) in der Matrix von Pixeln und eine Schätzzeit (t), Auswählen einer Menge ($S_{p,t}$) von Ereignissen, welche von Pixeln stammen, welche in einer räumlichen Nachbarschaft ($\pi_p$) des Schätzorts enthalten sind, und in einem Zeitintervall ($\theta$) aufgetreten sind, welches bezüglich der Schätzzeit definiert ist, wobei die Menge höchstens ein Ereignis pro Pixel der räumlichen Nachbarschaft aufweist und jedes Ereignis umfasst, welches eine Auftrittszeit in dem Zeitintervall ($\theta$) aufweist, welches bezüglich der Schätzzeit definiert ist, und für einen Pixel der räumlichen Nachbarschaft ($\pi_p$) des Schätzorts gespeichert ist; und
    - Quantifizieren der Variationen der Auftrittszeiten der Ereignisse der ausgewählten Menge als Funktion von Positionen von Pixeln in der Matrix, von welchen diese Ereignisse stammen.

2. Verfahren nach Anspruch 1, wobei die Quantifizierung der Variationen das Schätzen einer Steilheit umfasst, welche die Ereignisse der ausgewählten Menge ($S_{p,t}$) in einer Raum-Zeit-Repräsentation um den Schätzort herum aufweisen.

3. Verfahren nach Anspruch 2, umfassend, vor dem Schätzen der Steilheit, einen Glättungsvorgang in der Raum-Zeit-Repräsentation der ausgewählten Menge von Ereignissen ($S_{p,t}$).

4. Verfahren nach einem der Ansprüche 2 und 3, wobei die Matrix von Pixeln bidimensional ist und die Quantifizierung der Variationen das Bestimmen einer Ebene umfasst, welche eine minimale Distanz bezüglich der Ereignisse der ausgewählten Menge ($S_{p,t}$) in der Raum-Zeit-Repräsentation aufweist.

5. Verfahren nach einem der Ansprüche 2 und 3, wobei die Matrix von Pixeln mono-dimensional ist und die Quantifizierung der Variationen die Bestimmung einer geraden Linie umfasst, welche eine minimale Distanz bezüglich der Ereignisse der ausgewählten Menge ($S_{p,t}$) in der Raum-Zeit-Repräsentation aufweist.

6. Verfahren nach einem der Ansprüche 2 bis 5, wobei die Quantifizierung der Variationen ferner eine Schätzung von zweiten Ableitungen umfasst, welche die Ereignisse der ausgewählten Menge ($S_{p,t}$) in der Raum-Zeit-Repräsentation um den Schätzort herum aufweisen.

7. Verfahren nach einem der vorhergehenden Ansprüche, wobei die Ereignisse, welche von den Pixeln der Matrix stammen, jeweils eine Polarität aus mehreren möglichen Polaritäten aufweisen, und wobei die ausgewählte Menge von Ereignissen ($S_{p,t}$) für den Schätzort und die Schätzzeit aus Ereignissen mit beliebiger Polarität besteht.

8. Verfahren nach einem der Ansprüche 1 bis 7, wobei die Ereignisse, welche von den Pixeln der Matrix stammen, jeweils eine Polarität aus zwei möglichen Polaritäten aufweisen, und wobei die ausgewählte Menge von Ereignissen ($S_{p,t}$) für den Schätzort und die Schätzzeit aus Ereignissen mit gleicher Polarität besteht.

9. Verfahren nach Anspruch 8, wobei für jeden Pixel der Matrix und jede mögliche Polarität die Zeit des Auftretens des jüngsten Ereignisses, welches von dem Pixel mit der Polarität stammt, gespeichert wird, und wobei die Auswahl der Menge von Ereignissen ($S_{p,t}$) für den Schätzort und die Schätzzeit, dem Empfang eines Ereignisses mit einer gegebenen Polarität an dem Schätzort folgend, umfasst:

- Aufnehmen von jedem Ereignis in der Menge, welches die gegebene Polarität und eine Zeit eines Auftretens in dem Zeitintervall aufweist, welches bezüglich Schätzzeiten definiert ist und für einen Pixel in der räumlichen Nachbarschaft des Schätzorts gespeichert ist.

10. Verfahren nach einem der vorhergehenden Ansprüche, wobei das Zeitintervall (θ) eine Periode von vordefinierter Dauer (T) ist, welche zu der Schätzzeit endet.

11. Verfahren nach einem der vorhergehenden Ansprüche, wobei die Schritte des Auswählens einer Menge von Ereignissen ($S_{p,t}$) und der Quantifizierung von Variationen der Auftrittszeiten durchgeführt werden, indem als Schätzort die Position eines Pixels, wo ein Ereignis detektiert wird, und als Schätzzeit ein Detektionszeitpunkt des Ereignisses genommen wird.

12. Verfahren nach Anspruch 11, wobei die Auswahl der Menge von Ereignissen ($S_{p,t}$) als Reaktion auf die Detektion eines Ereignisses ausgeführt wird, welches von einem Pixel aus der Matrix zu einem Detektionszeitpunkt stammt, und wobei die Quantifizierung der Variationen der Auftrittszeiten ausgeführt wird, um eine Bewegungsinformation unter der Bedingung zu aktualisieren, dass die Menge von Ereignissen eine Anzahl von Ereignissen enthält, welche größer als ein Schwellenwert ist.

13. Vorrichtung zum Schätzen eines optischen Flusses, umfassend:

- einen Lichtsensor, welcher eine Matrix von Pixeln aufweist, welche zu einer Szenerie weisend anzuordnen und dazu eingerichtet sind, asynchrone Informationen zu liefern, welche für jeden Pixel der Matrix aufeinander folgende Ereignisse umfassen, welche von dem Pixel stammen und von Variationen des Lichts in der Szenerie abhängen; und
- eine Berechnungseinheit,

**dadurch gekennzeichnet, dass** die Berechnungseinheit dazu eingerichtet ist, für jeden Pixel der Matrix die Zeit eines Auftretens eines jüngsten Ereignisses zu speichern, welches von dem Pixel stammt, und die folgenden Schritte für einen Schätzort in der Matrix von Pixeln und eine Schätzzeit durchzuführen:

- Auswählen einer Menge ($S_{p,t}$) von Ereignissen, welche von Pixeln stammen, welche in einer räumlichen Nachbarschaft des Schätzorts enthalten sind und in einem Zeitintervall aufgetreten sind, welches bezüglich der Schätzzeit definiert ist, wobei die Menge höchstens ein Ereignis pro Pixel der räumlichen Nachbarschaft aufweist und jedes Ereignis umfasst, welches eine Auftrittszeit in dem Zeitintervall (θ) aufweist, welches bezüglich der Schätzzeit definiert ist, und für einen Pixel der räumlichen Nachbarschaft ($\pi_p$) des Schätzorts gespeichert ist; und
- Quantifizieren der Variationen der Auftrittszeiten der Ereignisse der ausgewählten Menge als Funktion von Positionen von Pixeln in der Matrix, von welchen diese Ereignisse stammen.

**Claims**

1. A method for estimating optical flow, comprising:

- receiving asynchronous information originating from a light sensor (10) having a pixel matrix arranged facing a scene, the asynchronous information comprising, for each pixel of the matrix, successive events originating from said pixel and depending on light variations in the scene,

**characterized in that** it further comprises:

- for each pixel of the matrix, memorizing the time of occurrence of the most recent event originating from said pixel;
- for a place of estimation (p) in the pixel matrix and an estimation time (t), selecting a set ($S_{p,t}$) of events originating from pixels lying in a spatial neighborhood ($\pi_p$) of the place of estimation and having arisen in a time interval (θ) defined with respect to the estimation time, the set having at most one event per pixel of the spatial neighborhood and including each event having a time of occurrence in said time interval (θ) defined with respect to the estimation time and memorized for a pixel of said spatial neighborhood ($\pi_p$) of the place of estimation; and
- quantizing variations in the times of occurrence of the events of the selected set as a function of positions, in the matrix, of the pixels from which said events originate.

2. The method as claimed in claim 1, wherein the quantization of the variations comprises estimating a slope that the events of the selected set ($S_{p,t}$) exhibit in a space-time representation around the place of estimation.

3. The method as claimed in claim 2, comprising, before estimating the slope, a smoothing operation, in space-time representation, on the selected set of events ($S_{p,t}$).

**4.** The method as claimed in any one of claims 2 and 3, wherein the pixel matrix is two-dimensional and the quantization of the variations comprises determining a plane exhibiting a minimum distance with respect to the events of the selected set $(S_{p,t})$ in the space-time representation.

**5.** The method as claimed in any one of claims 2 and 3, wherein the pixel matrix is one-dimensional and the quantization of the variations comprises determining a straight line exhibiting a minimum distance with respect to the events of the selected set $(S_{p,t})$ in space-time representation.

**6.** The method as claimed in any one of claims 2 to 5, wherein the quantization of the variations further comprises estimating second-order derivatives that the events of the selected set $(S_{p,t})$ exhibit in the space-time representation around the place of estimation.

**7.** The method as claimed in any one of the preceding claims, wherein the events originating from pixels of the matrix each have a polarity from among several possible polarities, and wherein the set $(S_{p,t})$ of events selected for the place of estimation and the estimation time is composed of events of any polarity.

**8.** The method as claimed in any one of claims 1 to 7, wherein the events originating from the pixels of the matrix each have a polarity from among two possible polarities, and wherein the set $(S_{p,t})$ of events selected for the place of estimation and the estimation time is composed of events of the same polarity.

**9.** The method as claimed in claim 8, wherein, for each pixel of the matrix and each possible polarity, the time of occurrence of the most recent event originating from said pixel with said polarity is memorized, and wherein the selection of the set $(S_{p,t})$ of events for the place of estimation and the estimation time comprises, following receipt of an event having a given polarity at the place of estimation:

- including in said set each event having the given polarity and a time of occurrence in the time interval defined with respect to the estimation time and memorized for a pixel of the spatial neighborhood of the place of estimation.

**10.** The method as claimed in any one of the preceding claims, wherein said time interval $(\theta)$ is a period of predefined duration (T) ending at the estimation time.

**11.** The method as claimed in any one of the preceding claims, wherein the steps of selecting a set $(S_{p,t})$ of events and of quantizing the variations in the times of occurrence are executed by taking as place of estimation the position of a pixel where an event is detected and as estimation time an instant of detection of said event.

**12.** The method as claimed in claim 11, wherein the selection of the set $(S_{p,t})$ of events is carried out in response to detection of an event originating from a pixel of the matrix at an instant of detection, and wherein the quantization of the variations in the times of occurrence is carried out to update motion information on condition that the set of events contains a number of events above a threshold.

**13.** A device for estimating optical flow, comprising:

- a light sensor having a pixel matrix to be arranged facing a scene and adapted to output asynchronous information comprising, for each pixel of the matrix, successive events originating from said pixel and depending on light variations in the scene; and
- a computer,

**characterized in that** the computer is configured to memorize, for each pixel of the matrix, the time of occurrence of the most recent event originating from said pixel, and to execute the following steps for a place of estimation in the pixel matrix and an estimation time:

• selecting a set of events originating from pixels lying in a spatial neighborhood of the place of estimation and having arisen in a time interval defined with respect to the estimation time, the set having at most one event per pixel of the spatial neighborhood and including each event having a time of occurrence in said time interval $(\theta)$ defined with respect to the estimation time and memorized for a pixel of said spatial neighborhood $(\pi_p)$ of the place of estimation; and
• quantizing variations in the times of occurrence of the events of the selected set as a function of positions, in the matrix, of the pixels from which said events originate.

**FIG. 1**

**FIG. 2A**

**FIG. 2B**

**FIG. 2C**

FIG. 3A

FIG. 3B

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20080135731 A1

**Littérature non-brevet citée dans la description**

• **J.L. BARRON et al.** Performance of Optical Flow Techniques. *International Journal of Computer Vision,* vol. 12 (1), 43-77
• **T. DELBRÜCK et al.** Activity-Driven, Event-Based Vision Sensors. *Proceedings of 2010 IEEE International Symposium on Circuits and Systems (ISCAS),* 2426-2429
• Frame-free dynamic digital vision. **T. DELBRÜCK.** Proceedings of the International Conférence on Secure-Life Electronics, Advanced Electronics for Quality Life and Society. Université de Tokyo, 06 Mars 2008, 21-26

• **R. BENOSMAN.** Asynchronous frameless event-based optical flow. *Neural Networks,* Mars 2012, vol. 27, 32-37
• **P. LICHTSTEINER et al.** A 128×128 120 dB 15 $\mu$s Latency Asynchronous Temporal Contrast Vision Sensor. *IEEE Journal of Solid-State Circuits,* Février 2008, vol. 43 (2), 566-576